# EUROPÄISCHE PATENTSCHRIFT

(11) **EP 0 960 268 B1**
(45) Veröffentlichungstag und Bekanntmachung des Hinweises auf die Patenterteilung: **11.09.2002**
(21) Anmeldenummer: 98904159.5
(22) Anmeldetag: 29.01.1998
(51) Int. Cl.: F02B 31/06, F02D 9/16

(54) **VORRICHTUNG ZUR BEEINFLUSSUNG DER ANSAUGSTRÖMUNG BEI EINEM VERBRENNUNGSMOTOR**
DEVICE FOR INFLUENCING INTAKE AIR FLOW IN AN INTERNAL COMBUSTION ENGINE
DISPOSITIF POUR INFLUENCER LE COURANT D'AIR D'ASPIRATION DANS UN MOTEUR A COMBUSTION INTERNE

(30) Priorität: 31.01.1997 DE 19703498; 06.02.1997 DE 19704388
(43) Veröffentlichungstag der Anmeldung: 01.12.1999
(73) Patentinhaber: FILTERWERK MANN & HUMMEL GmbH, 71631 Ludwigsburg (DE)
(72) Erfinder: FISCHER, Christian, D-70736 Fellbach (DE); PAFFRATH, Holger, D-71636 Ludwigsburg (DE)
(74) Vertreter: Voth, Gerhard, Dipl.-Ing.
(86) Internationale Anmeldenummer: EP9800463
(87) Internationale Veröffentlichungsnummer: WO98034017

(56) Entgegenhaltungen:
- EP-A- 0 725 210
- DE-A- 3 039 774
- DE-A- 3 522 991
- NL-C- 60 523

## Beschreibung

### Stand der Technik

Die Erfindung betrifft eine Vorrichtung zur Beeinflussung der Ansaugströmung bei einem Verbrennungsmotor nach dem Oberbegriff des Hauptanspruchs.

Es ist beispielsweise aus der DE 691 03 000 T2 eine Luftansauganlage für eine Brennkraftmaschine bekannt, bei der im Zylinderblock an zwei Gaseinlässen für jeden Zylinder der Brennkraftmaschine jeweils ein Rippe angeordnet ist, die in die Ansaugströmung hineinbewegt werden kann und dabei eine Trommelverwirbelung der angesaugten Luft hervorruft.

Bei einem anderen Ausführungsbeispiel der oben erwähnten bekannten Anlage ist zur Trommelverwirbelung an der Wand des Ansaugtraktes eine Platte montiert, die in verschiedene Stellungen längs verschoben werden kann und dadurch in eine Krümmung des Ansaugtraktes im Zylinderblock hineinragt und dadurch ebenfalls eine Trommelverwirbelung der Ansaugströmung in der Luftansauganlage hervorrufen kann. Die Anbringung und die effektive Wirkung des mechanischen Teils zum Hervorrufen der Verwirbelung ist im Ansaugtrakt dabei von großer Bedeutung.

Es ist an sich bekannt, dass die Form der Ladungsbewegung im Motorbrennraum während des Einlassvorgangs des Verbrennungsmotors den Verbrennungsvorgang entscheidend beeinflusst. Dabei werden je nach Betriebspunkt des Motors, d.h. eine bestimmte Last oder Drehzahl, unterschiedliche Anforderungen an die Ladungsbewegung gestellt.

Während z.B. bei niedrigen Drehzahlen und Lasten eine Erhöhung der Turbulenz im Zylinder Vorteile hinsichtlich der Verbrennungsstabilität erzielen kann, wird bei hohen Drehzahlen und Lasten eine möglichst gute Einströmung ohne Verluste gefordert, um möglichst viel Luft bzw. Kraftstoffgemisch in den Motor zu bekommen.

Die Form der Ladungbewegung wird maßgeblich durch die Geometrie des Einlasskanals beeinflusst; eine Konstruktion für eine erhöhte Ladungsbewegung reduziert im allgemeinen die Durchsatzgüte. Eine Auslegung des Ansaugkanals mit einer festen Geometrie ist hierbei lediglich ein Kompromiss hinsichtlich der unterschiedlichen Anforderungen an die Ladungsbewegung.

Aus der DE 30 39 774 ist eine Brennkraftmaschine bekannt, wobei in dem jeweiligen Einlasskanal Mittel zur Erzeugung eines Dralls vorgesehen sind. Dieses sind Klappen, die um eine Achse verschwenkbar gehalten sind. Ein Nachteil dieser Einrichtung ist darin zu sehen, dass bei der Montage des Ansaugsystems an dem Motor bzw. bei einer Reparatur die Gefahr besteht, dass die Klappen beschädigt werden können, da diese Klappen äußerst stoßempfindlich sind und über den Flansch des Ansaugsystems des Ansaugsystems hinausragen.

### Aufgabenstellung

Der Erfindung liegt die Aufgabe zugrunde, eine Vorrichtung zur Beeinflussung der Ansaugströmung bei einem Verbrennungsmotor einfach herzustellen und besonders zuverlässig arbeitend im Ansaugtrakt anzubringen.

### Vorteile der Erfindung

In vorteilhafter Weise wirkt die Zunge erfindungsgemäß als Schalt- oder Steuerelement um gezielt dort Ladungsbewegungen durch die Trommelverwirbelung zu erzeugen, wo sie für die Verbrennung im Verbrennungsmotor erforderlich ist; somit kann man den Einlasskanal auf hohe Durchlässe auslegen ohne auf die bei bestimmten Betriebsbedingungen vorteilhaften Ladungsbewegungen zu verzichten. Die Trommelverwirbelung stellt hierbei eine Rotation der Ladungsmasse um eine Achse senkrecht zur Zylinderachse dar. Hierbei soll jedoch auch eine Rotation um die Zylinderachse, ein sogenannter Drall, erzeugbar sein.

Je nach Lage und Länge der Umlenkflächen können diese aus dem Saugrohr heraus auch, wie oben beschrieben, in den Zylinderkopf hineinragen. Zum Montageschutz wird in vorteilhafter Weise das Saugrohr derart verlängert, dass die Umlenkflächen ganz geschützt sind. Der Kanal im Zylinderkopf muss dafür im Durchmesser so weit aufgeweitet werden, dass die Rohrverlängerung in den Kanal eingeführt werden kann.

Die Verlängerung kann auch als separates Teil an das Saugrohr geschnappt werden und kann bei der Montage durch einen Klemmbund zwischen Saugrohr und Zylinderkopf verklemmt werden. Zum Ausgleich des fertigungsbedingten Versatzes zwischen Saugrohrkanal und dem Kanal im Zylinderkopf sind an der Rohrverlängerung elastische Lippen angeformt, welche auftretende Sprünge weicher ausgleichen.

### Zeichnung

Ausführungsbeispiele der erfindungsgemäßen Vorrichtung werden anhand der Zeichnung erläutert. Es zeigen:
Figur 1 im linken Teil einen seitlichen Schnitt durch den Ansaugtrakt eines Verbrennungsmotors mit einer in die Kontur des Ansaugtraktes eingefahrenen Zunge und im rechten Teil einen Querschnitt durch den Ansaugtrakt;
Figur 2 im linken Teil einen seitlichen Schnitt durch den Ansaugtrakt eines Verbrennungsmotors mit einer in die Ansaugströmung hineinragenden Zunge und im rechten Teil einen Querschnitt durch den Ansaugtrakt;
Figur 3 einen ersten Schnitt durch ein Ausführungsbeispiel mit einem Drehschieber mit zungenartiger Verlängerung und
Figur 4 einen zweiten Schnitt durch das Ausführungsbeispiel nach Figur 3.

### Beschreibung der Ausführungsbeispiele

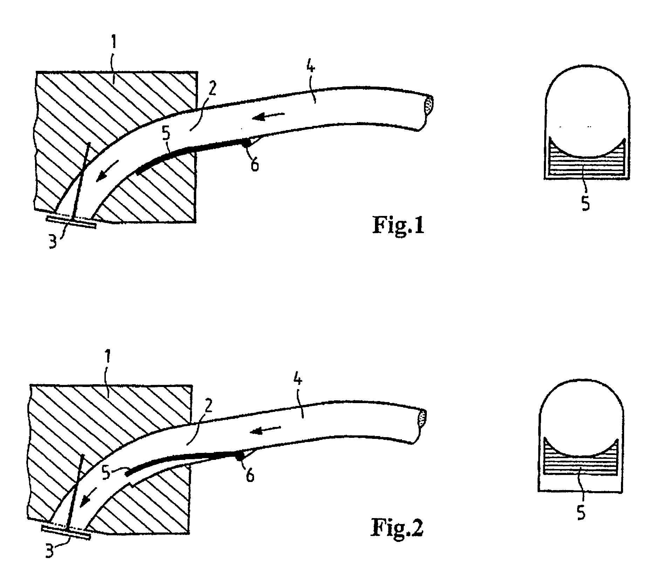

In Figur 1 ist im linken Teil ein Ausschnitt aus einem Zylinderblock 1 gezeigt, mit einem Einlasskanal 2 der an einem Ventil 3 endet und Bestandteil des Ansaugtraktes für jeweils einen Zylinder ist. An den Einlasskanal 2 des Zylinderblocks 1 ist ein Ansaugrohr 4 angefügt, das den Zylinderblock 1 mit den weiteren Teilen des hier nicht weiter dargestellten Ansaugtraktes verbindet.

In der Figur 1 ist eine Zunge 5 gezeigt, die in die Kontur des Einlasskanals 2 des Zylinderblocks 1 und des Ansaugrohres 4 eingefahren ist und damit die Ansaugströmung nicht behindert und keinerlei verwirbelnde Ladungsbewegung erzeugt. Im rechten Teil der Figur 1 ist im Querschnitt des Ansaugrohres 4 zu erkennen, dass die Kontur hier nicht verengt und somit gestört ist.

Aus Figur 2 ist sowohl aus dem linken wie auch aus dem rechten Teil zu erkennen, dass die Zunge 5 um einen Drehpunkt 6 aus der Lage nach der Figur 1 herausgedreht ist und somit verengend in die Ansaugströmung hineinragt und dadurch eine Ladungsbewegung durch Trommelverwirbelung erzeugbar ist.

Bei einer Anwendung mit mehreren Zylindern in einem Zylinderblock können die jeweiligen Zungen 5 dieser Zylinder in ihrer Bewegung mechanisch miteinander auf einfache Weise, beispielsweise durch eine Achse im Drehpunkt 6, die alle Zungen 5 miteinander verbindet, gekoppelt werden, damit sie gleiche Bewegungen ausführen.

Die Anordnung der jeweiligen Zunge 5 kann bei allen Ausführungsbeispielen an einer beliebigen Seite des Ansaugtraktes, oben, unten oder seitlich erfolgen. Der Einlasskanal 2 kann auf einfache Weise so bearbeitet werden, dass die Zunge 5, für den Fall, in dem sie keine Funktion hat, in die Einlasskanalwand eingelassen wird.

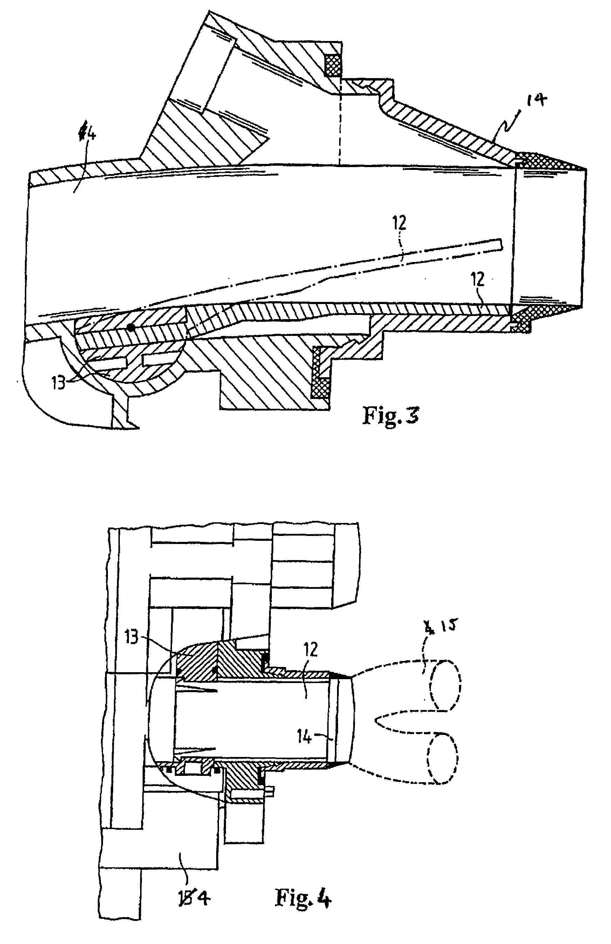

Figur 3 zeigt eine Luftumlenkfläche mit einer zungenartigen Verlängerung 12 eines Drehschiebers 13. Zum Schutz der Luftumlenkfläche ist diese Anordnung in einer Rohrverlängerung 14 an dem Saugrohr 4 vorgesehen.

Aus Figur 4 ist ein anderer Schnitt mit einer Draufsicht auf die zungenartige Verlängerung 12 nach der Figur 3 und die Verrastung oder die Verschnappung des Teils 12 in den Drehschieber 13 zu erkennen. Die Rohrverlängerung 14 ist dabei zwischen dem Ansaugkanal 4 und einem Zylinderblock 15 eingefügt.

## Patentansprüche

1. Vorrichtung zur Beeinflussung der Ansaugströmung bei einem Verbrennungsmotor mit einem in die Ansaugströmung hineinführbaren mechanischen Teil (5), das um einen Drehpunkt (6) drehbar gelagert ist und in einem Endlage im Ansaugkanal (2, 4) versenkbar ist und mit dem eine Verwirbelung der angesaugten Luft herbeiführbar ist, wobei der Drehpunkt (6) des als drehbare Zunge (5) ausgebildeten mechanischen Teils außerhalb des Zylinderblocks (1) für den Verbrennungsmotor in einem Ansaugrohr (4) liegt, wobei die Zunge in den Zylinderkopf hineinragt, **dadurch gekennzeichnet, daß**
zum Schutz der Zunge einer Rohrverlängerung (14) an dem Saugrohr vorgesehen ist.

2. Vorrichtung nach Anspruch 1, **dadurch gekennzeichnet, daß**
die Zunge (5) in dem jeweils einen Ansaugrohr (4) für jeweils einen Zylinder des Verbrennungsmotors angeordnet ist.

3. Vorrichtung nach einem der vorhergehenden Ansprüche, **dadurch gekennzeichnet, daß**
die Zungen (5) mehrerer Zylinder in ihrer Bewegung mechanisch miteinander gekoppelt sind.

## Claims

1. Apparatus for influencing the intake air flow in an internal combustion engine, said apparatus including a mechanical component part (5), which is insertable into the intake air flow and is mounted so as to be pivotable about a pivot point (6), said component part being lowerable in the inlet duct (2, 4) in one end position, and by means of which component part the drawn-in air can be caused to swirl, the pivot point (6) of the mechanical component part, which is in the form of a rotatable projection member (5), lying in an inlet pipe (4) externally of the cylinder block (1) for the internal combustion engine, the projection member protruding into the cylinder head, **characterised in that** a pipe extension (14) is provided on the induction manifold to protect the projection member.

2. Apparatus according to claim 1, **characterised in that** the projection member (5) is disposed in the respective inlet pipe (4) for each cylinder of the internal combustion engine.

3. Apparatus according to one of the preceding claims, **characterised in that** the projection members (5) of a plurality of cylinders are mechanically interconnected in respect of their displacement.

## Revendications

1. Dispositif pour influencer le courant d'air d'aspiration dans un moteur à combustion interne, dans lequel
- une partie mécanique (5), qui peut être introduite dans le courant d'aspiration, est montée pivotante autour d'un point de rotation (6) et peut en position extrême, basculer dans le canal (2, 4), cette partie pouvant provoquer le tourbillonnement de l'air aspiré,
- le point de rotation (6) de la partie mécanique constituée par une languette pivotante (5) se trouve dans une tubulure d'aspiration (4) à l'extérieur du bloc-cylindres du moteur,
**caractérisé en ce que**
pour protéger la languette, une prolongation tubulaire (14) est prévue sur le tube d'aspiration.

2. Dispositif selon la revendication 1,
**caractérisé en ce que**
la languette (5) est montée dans chaque tube d'aspiration (4) correspondant à un cylindre du moteur à combustion interne.

3. Dispositif selon l'une quelconque des revendications 1 ou 2,
**caractérisé en ce que**
les languettes (5) de plusieurs cylindres ont leurs mouvements mécaniquement accouplés.
